# EUROPEAN PATENT APPLICATION

(11) **EP 4 818 018 A1**
(43) Date of publication of application: **07.10.2026**
(21) Application number: 26169773.4
(22) Date of filing: 31.03.2026
(51) Int. Cl.: B62K 5/10, B62K 3/00, B62K 5/01, B62K 19/30, B62K 5/08

(54) **ELECTRIC SCOOTER WITH TILTING MECHANISMS**

(30) Priority: 06.04.2025 IL 32010525
(71) Applicant: Flash Motors Ltd, 8010 Paphos (CY)
(72) Inventor: BARUCH, Avishai Avraham, 9385864 Jerusalem (IL)
(74) Representative: Lapienis, Juozas

(57) **Abstract**

An electric scooter is disclosed, featuring a chassis (2) with a standing board (14) and front and back edges (24, 25) that include upper and bottom recesses (21) and holes (26). The scooter incorporates front and back wheel assemblies (12, 13) with suspensions (151) and connecting arms (152) extending into arm recesses with rods (4, 5). Elastic rubber pads (3) are positioned between these components, with holes (31) designed for controlled compression. The fastening configuration ensures that the rods (4, 5) pass through the rubber pads and chassis holes, maintaining stability while allowing flexibility. This design enhances ride comfort and durability by distributing forces efficiently and preserving pad elasticity, which enables the rods to squeeze the rubber when tilting inside the chassis holes.

## Description

### TECHNICAL FIELD

The present invention relates to a tilting mechanism assembled on an electric scooter.

### BACKGROUND ART

Conventional electric scooters typically have a rigid connection between the chassis and the wheel assemblies, limiting their ability to absorb shocks and provide smooth maneuvering. As a result, when a rider turns, the entire scooter structure remains level with the ground, leading to reduced comfort and stability.

Prior Art EP3500479 (WO2018/037400) discloses an elastic pivot structure comprising an upper suspension plate attached to the chassis, a middle suspension plate connected to a shock absorber, and set of elastic rubbers and rods elements positioned between these two plates to enable tilting. This design forms a gabled and bulky structure that raises both the chassis and the standing platform relative to the wheel system, and involves numerous components, which increases the complexity and cost of manufacturing, assembly, and maintenance. In contrast, the tilting mechanism of the present invention consists of only three parts, mounted directly to the chassis, resulting in a more compact, efficient, and cost-effective solution. The present invention addresses this limitation by introducing an elastic mounting system that allows controlled tilting of the chassis relative to the wheel assemblies.

### DESCRIPTION OF THE DRAWINGS

The intention of the drawings attached to the application is not to limit the scope of the invention and its application. The drawings are intended only to illustrate the invention and they constitute only one of its many possible implementations.
FIG. 1 depicts the electric scooter (1).FIG. 2 depicts the tilting mechanism (100).
FIG. 3 depicts the front portion (24) of the chassis that is similar to the rear one.
FIG. 4 depicts one of the portions of the chassis.
FIGS 5 and 6 illustrate the vertical rods inside the rubber pads when they are horizontally and when they are in action during tilting.
FIG. 7 and 8 depict schematically the front and the rear wheel assemblies.

### THE INVENTION

The main object of the present invention is to provide a tilting mechanism (100) integrated as part of an electric scooter (1). The tilting mechanism (100) comprises the chassis (2) of the scooter, four rubber pads (3), two front vertical rods (4), and two rear vertical rods (5). The scooter includes the steering rod assembly (11), the front wheel assembly (12), and the rear wheels assembly.

The tilting mechanism (100) is assembled on the electric scooter (1) and it includes he chassis (2), the rubber pads (3), and the vertical rods (4, 5). The chassis (2) has four recesses (21) formed on upper surfaces (22) and lower surfaces (23) of the front portion (24) and the rear portion (25) of the chassis. Each portion further includes two vertical holes (26). Each rubber pad (3) has two holes (31). Each rubber pad (3) is being disposed in one of the four recesses (21) in the chassis.

The two front rods (4) are extending from the front wheel assembly (12) and being disposed through the holes of the front portion (24) and the holes (31) of the pads (3) mounted therein. The two rear rods (5) extending from the rear wheel assembly (13) and being disposed through the holes of the rear portion (25) and the holes of the pads mounted therein.

The diameters (32) of the holes in the pads and the diameter (45) of the rods are smaller than the diameters (27) of the holes (26) in the chassis. The chassis is configured to tilt when the scooter turns, while the wheel assemblies (12, 13) remain horizontal and the pads therebetween are compressed.

The scooter includes a standing board (14) positioned on the top of the chassis. The recesses of each portion are provided opposite to each other. The holes on the chassis are in the recesses area and fit in position to the holes in the pads when they are disposed in the recesses. Each wheel assembly comprises two wheels (150), a suspension (151) for shock absorption, and a main arm (152) from which the rods (4, 5) extend. The chassis is connected to the wheels assemblies by the tilting mechanisms. The electric scooter may further include clamping plates (61) and screws (62) that penetrate threaded holes (63) in the vertical rods.

The fastening configuration ensures that the diameters of the holes in the rubber pads and the vertical rods are smaller than the diameters of the holes in the chassis. This allows the rods to be inserted sequentially through the holes of the rubber pad that is disposed in the lower surface of the chassis, the holes in the chassis, and the holes of the rubber pad disposed on the upper surface of the chassis.

During tilting or turning of the scooter, the chassis and the standing board tilt in the direction of the turn, while the front and rear wheel assemblies remain stable and substantially horizontal. This effect is achieved because the vertical rods are inserted through the elastic rubber pads, allowing limited horizontal movement of the chassis relative to the wheels. As the rods compress the elastic rubber pads, the chassis tilts with respect to the wheel assemblies, enhancing maneuverability and ride stability.

This unique tilting mechanism provides improved comfort and handling, making the electric scooter safer and more responsive for the rider. The combination of elastic components and fastening configurations ensures a smooth and controlled tilting effect without compromising the structural integrity of the scooter.

The relative movement between the standing platform together with the chassis and the wheel systems enhances the scooter's stability by distributing forces - primarily centrifugal forces - when turning or tilting. Additionally, positioning the pads within the recesses, as described above, ensures they remain securely in the recesses without the need to overtighten the locking screws. This prevents excessive compression of the pads, preserving their elasticity, which is essential for allowing the rods to squeeze the rubber when tilting inside the holes at the edges of the chassis.

The goal is to allow the standing board to tilt while keeping the wheels stable and firmly in contact with the ground. When the rider turns, centrifugal force naturally makes both the rider and the standing board lean to the side. The tilting mechanism lets the board tilts independently of the wheels, helping the wheels stay upright and maintain good grip on the road. The tilt axis (7) runs horizontally and is positioned along the vertical centerline of the bottom pad and chassis. A key feature of this mechanism is that the tilt axis is located on the chassis itself, not below it. This design improves stability and makes riding smoother, because it reduces side-to-side (horizontal) shifting of the chassis during tilting. If the tilt axis were placed below the chassis, this sideways movement would be greater and reduce stability.

The chassis tilts along a horizontal tilt axis relative to the wheels and in fact relative to the main arms of the wheels while the bottom rubber pads are compressed by them. The fact that the bottom rubber pads are attached directly to the chassis (the edges of the chassis) causes this axis to be inside the volume of the chassis itself or close beneath it, which contributes to improved stability by reducing horizontal displacement of the chassis and mainly the standing board of the chassis during tilting.

The tilting action occurs between the lower rubber and the edges of the chassis. However, the inventor added a top rubber pad so that the rods are not bolted directly to the chassis, which could reduce the tilt efficiency and slow the tilting response. Instead, the connection is made through the top rubber pad, allowing the rod ends to press into the rubber and enabling smooth and effective tilting.

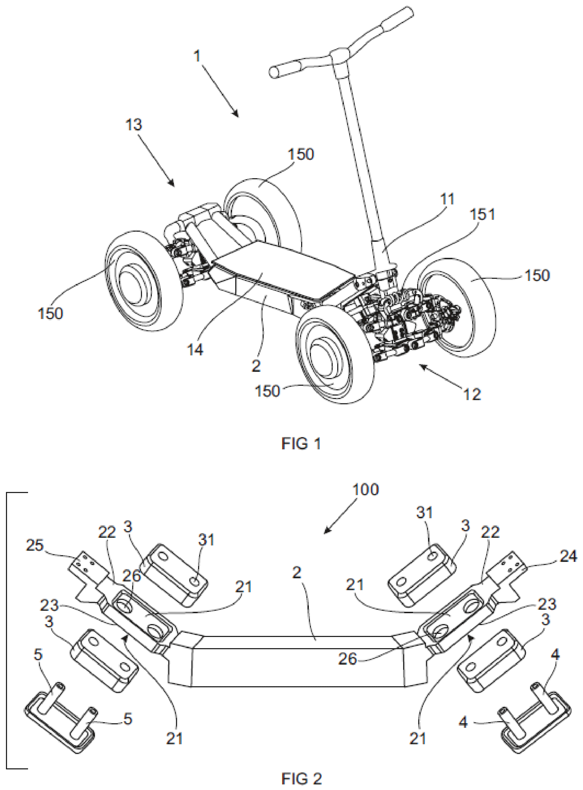

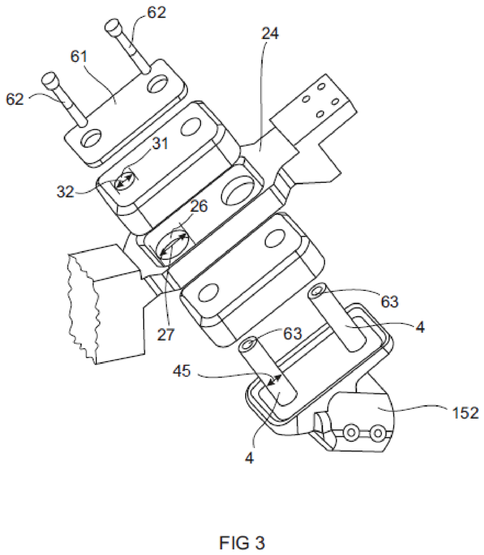

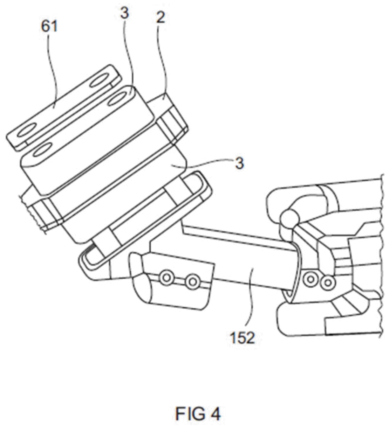

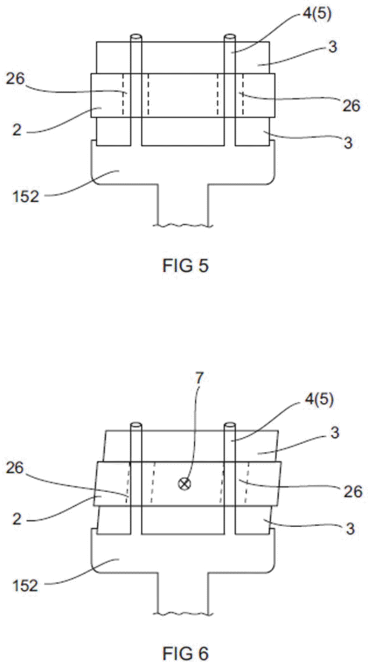

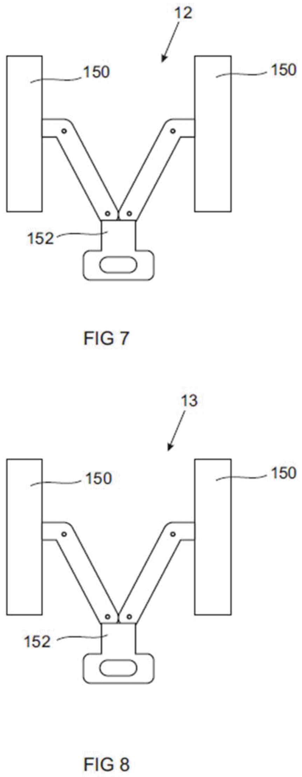

Figure 1 depicts the electric scooter (1), Figure depicts the tilting mechanism (100), Figure 3 depicts the front portion (24) of the chassis that is similar in general to the rear portion, Figure 4 depicts in general the one of the portions of the chassis, Figures 5 and 6 illustrate the vertical rods inside the rubber pads when they are horizontally and when they are in action during tilting, and Figures 7 and 8 depict schematically the front and the rear wheel assemblies.

## Claims

1. A tilting mechanism (100) integrated within a chassis (2) of an electric scooter (1), comprising:
(a) a chassis (2) having four recesses (21) formed on upper surfaces (22) and lower surfaces (23) of a front portion (24) and a rear portion (25) of the chassis, each portion further including two vertical holes (26);
(b) four rubber pads (3), each pad having two holes (31) and being disposed in one of said recesses;
(c) two front rods (4) extending from a front wheel assembly (12) and being disposed through the holes of the front portion and the holes of the pads mounted therein;
(d) two rear rods (5) extending from a rear wheel assembly (13) and being disposed through the holes of the rear portion and the holes of the pads mounted therein;
(e) wherein diameters (32) of the holes in the pads and the diameter (45) of the rods are smaller than diameters (27) of the holes in the chassis;
(f) wherein the chassis is configured to tilt when the scooter turns, while the wheel assemblies remain horizontal and the pads therebetween are compressed; and
(g) wherein the tilting of the chassis occurs about tilting points located within the interior volume of the chassis, defined by the relative movement between the rods and the holes of the chassis.
